# EUROPÄISCHE PATENTSCHRIFT

(11) **EP 2 024 060 B1**
(45) Veröffentlichungstag und Bekanntmachung des Hinweises auf die Patenterteilung: **27.04.2016**
(21) Anmeldenummer: 07729280.3
(22) Anmeldetag: 18.05.2007
(51) Int. Cl.: B01D 53/14, B01D 53/62

(54) **VORMISCHUNG ZUR HERSTELLUNG EINES ABSORPTIONSMITTELS ZUM ENTFERNEN SAURER GASE AUS FLUIDSTRÖMEN**
PREMIXTURE FOR PREPARING AN ABSORBENT FOR REMOVING ACIDIC GASES FROM FLUID STREAMS
PRÉMÉLANGE POUR LA FABRICATION D'UN AGENT D'ABSORPTION POUR L'ÉLIMINATION DE GAZ ACIDES DE COURANTS DE FLUIDE

(30) Priorität: 19.05.2006 EP 06114244
(43) Veröffentlichungstag der Anmeldung: 18.02.2009
(73) Patentinhaber: BASF SE, 67056 Ludwigshafen am Rhein (DE)
(72) Erfinder: ASPRION, Norbert, 67063 Ludwigshafen (DE)
(74) Vertreter: BASF IP Association
(86) Internationale Anmeldenummer: PCT/EP2007/054836
(87) Internationale Veröffentlichungsnummer: WO 2007/135100

(56) Entgegenhaltungen:
- EP-A1- 0 879 631
- WO-A-02/09849
- WO-A-03/076049
- US-A- 4 336 233
- US-B2- 6 939 393

## Beschreibung

Die vorliegende Erfindung betrifft eine Vormischung zur Herstellung eines Absorptionsmittels zum Entfernen saurer Gase aus Fluidströmen und ein Verfahren zur Herstellung eines Absorptionsmittels.

In zahlreichen Prozessen in der chemischen Industrie treten Fluidströme auf, die Sauergase, wie z.B. CO₂, H₂S, SO₂, CS₂, HCN, COS oder Merkaptane enthalten. Bei diesen Fluidströmen kann es sich beispielsweise um Gasströme wie Erdgas, Raffineriegas, Synthesegas, Rauchgase oder bei der Kompostierung organischer Substanzen enthaltender Abfallstoffe entstehende Reaktionsgase handeln.

Die Entfernung der Sauergase ist aus unterschiedlichen Gründen von besonderer Bedeutung. Der Gehalt an Schwefelverbindungen von Erdgas muss durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Die bei der Oxidation organischer Materialien, wie beispielsweise organische Abfälle, Kohle oder Erdöl, oder bei der Kompostierung organischer Substanzen enthaltender Abfallstoffe entstehenden Reaktionsgase müssen entfernt werden, um die Emission von Gasen, die die Natur schädigen oder das Klima beeinflussen können zu verhindern.

Zur Entfernung von Sauergasen werden Wäschen mit Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Die EP-A 879 631 empfiehlt zur Entfernung von CO₂ aus Rauchgasen eine wässrige Aminlösung, die ein sekundäres Amin und ein tertiäres Amin in Konzentrationen von jeweils 10 bis 45 Gew.-% enthält.

In der Praxis bewährt hat sich das in dem US-Patent US 4,336,233 beschriebene Absorptionsmittel. Es handelt sich dabei um eine wässrige Lösung von Methyldiethanolamin (MDEA) und Piperazin als Absorptionsbeschleuniger oder Aktivator. Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin.

Die WO 02/09849 beschreibt ein Verfahren zu Gewinnung von sehr reinem CO₂ aus Verbrennungsabgasen. Bei dem Verfahren wird ein wässriges Lösungsmittel eingesetzt, das ein Alkanolamin, insbesondere Methyldiethanolamin, und einen Aktivator, bevorzugt Piperazin, enthält. Im wässrigen Lösungsmittel soll die Konzentration des Alkanolamins 5 bis 80 Gew.-% betragen. Die Konzentration des Aktivators soll in einer unverdünnten Stammlösung 1 bis 20 Gew.-% betragen. Die Stammlösung soll vor der Einleitung in den Absorber mit Wasser 0- bis 4-fach verdünnt werden.

Die US 6,939,393 B2 beschreibt eine Waschflüssigkeit umfassend eine wässrige Aminlösung, die zumindest ein tertiäres aliphatisches Alkanolamin mit 2 bis 12 Kohlenstoffatomen, beispielsweise Methyldiethanolamin, und ein Alkylendiamin als Aktivator enthält. In der Waschflüssigkeit beträgt die Konzentration des tertiären aliphatischen Alkanolamins vorzugsweise 10 bis 60 Gew.-% und die Konzentration des Aktivators vorzugsweise 0,1 bis 50 Gew.-%. Es ist angegeben, dass die Waschflüssigkeit normalerweise als Konzentrat hergestellt wird, welches durch Zugabe von Wasser auf die Zielkonzentration verdünnt wird und dass die Waschflüssigkeit außerdem 1 bis 20 Gew.-% Piperazin oder Methylpiperazin als zusätzlichen Aktivator enthalten kann. Die WO 03/076049 beschreibt eine Waschflüssigkeit, die Wasser, 3-Dimethylamino-1-propanol und Piperazin enthält. Üblicherweise werde die Waschflüssigkeit als Konzentrat hergestellt, das vom Nutzer durch Zugabe von Wasser auf die Endkonzentration verdünnt werden soll.

Aus der WO 03/009924 ist ein Verfahren zur Entfernung von sauren Gasen aus einem Gasstrom bekannt, bei dem ein die sauren Gase enthaltender Gasstrom, in dem die Summe der Partialdrücke der sauren Gase 1500 mbar nicht übersteigt, in einem Absorptionsschritt mit einem wässrigen Absorptionsmittel in Kontakt gebracht und ein Absorptionsmittel verwendet wird, das mindestens ein tertiäres Alkanolamin und Piperazin in einer Konzentration von mindestens 8 Gew. -% des Absorptionsmittels enthält.

Die WO 00/66249 offenbart ein Absorptionsmittel zur Entfernung saurer Gase, das eine wässrige Lösung mit mehr als 1 mol/l Piperazin und 1,5 bis 6 mol Methyldiethanolamin umfasst.

Die wässrigen Lösungen enthalten einen hohen Anteil Wasser. Beim Transport des Absorptionsmittels zur Gasbehandlungsanlage ist man bestrebt, den Wasseranteil so gering wie möglich zu halten, um die Transportkosten zu minimieren. Der Transport von reinem Methyldiethanolamin und von reinem Piperazin ist zwar prinzipiell möglich. Piperazin ist aber bei Umgebungstemperaturen ein Feststoff; seine Stäube wirken sensibilisierend. Zum Lösen von festem Piperazin sind Mischvorrichtungen, wie Rührer oder feststofftaugliche Pumpen und gegebenenfalls Wärmequellen, erforderlich. Außerdem sind Sicherheitsvorkehrungen für das Personal vorzusehen, z. B. Absaugungen und Vollschutzausrüstungen. Derartige Einrichtungen sind an den Standorten der Gasbehandlungsanlagen in der Regel nicht vorhanden.

Es ist bereits versucht worden, konzentrierte Vormischungen herzustellen, die einen höheren Gesamtamingehalt aufweisen als das gebrauchsfertige Absorptionsmittel. Die Vormischung kann an der Gasbehandlungsanlage mit Wasser verdünnt werden. Der Transport solcher konzentrierter Vormischungen ist allerdings dadurch erschwert, dass Piperazin aus den konzentrierten Lösungen bereits bei vergleichsweise hoher Temperatur auszukristallisieren beginnt. Wenn eine Kristallisation des Piperazins eingetreten ist, kann die Vormischung nicht mehr umgepumpt werden und die kontaminierten Behälter müssen in aufwendiger Weise gesäubert werden. Das erneute Lösen des Piperazins kann nur durch eine oder mehrere der oben beschriebenen Maßnahmen erfolgen. Es liegt auf der Hand, dass eine Vormischung um so zweckmäßiger ist, je niedriger ihr Erstarrungspunkt liegt.

Der Erfindung liegt daher die Aufgabe zugrunde, eine konzentrierte Vormischung für ein Absorptionsmittel anzugeben, das Piperazin und wenigstens ein Alkanolamin enthält, deren Erstarrungspunkt möglichst niedrig liegt.

Es wurde nun gefunden, dass der Erstarrungspunkt der Vormischung stark vom molaren Verhältnis von Wasser zu Piperazin in der Vormischung abhängt und dass der Erstarrungspunkt bei bestimmten Verhältnissen ein Minimum aufweist.

Erfindungsgemäß wird die Aufgabe gelöst durch eine Vormischung zur Herstellung eines Absorptionsmittels zum Entfernen saurer Gase aus Fluidströmen, die wenigstens ein Alkanolamin, Piperazin und Wasser enthält, wobei die Vormischung einen Gesamtamingehalt von mehr als 65 Gew.-% aufweist und das molare Verhältnis von Wasser zu Piperazin in der Vormischung 1,6 bis 4,8, vorzugsweise 1,6 bis 3,9, stärker bevorzugt 1,6 bis 3,45 und am meisten bevorzugt 1,6 bis 3,35, beträgt und die Vormischung einen Erstarrungspunkt von weniger als 35°C aufweist.

Zum Einsatz in der erfindungsgemäßen Vormischung eignen sich alle Alkanolamine, die üblicherweise zur Entfernung von sauren Gasen aus Fluidströmen verwendet werden. Hierzu zählen beispielsweise Monoethanolamin (MEA), Diethanolamin (DEA), Triethanolamin (TEA), Diethylethanolamin (DEEA), Methyldiethanolamin (MDEA), Methyldiisopropanolamin (MDIPA) oder Gemische davon.

Geeignet sind insbesondere Alkanolamine der allgemeinen Formel

R¹ₙR²₍₃₋ₙ₎N

worin R¹ für Hydroxy-C₂-C₃-alkyl, R² für C₁-C₃-Alkyl und n für eine ganze Zahl von 1 bis 3, vorzugsweise 1 oder 2, am meisten bevorzugt 2, steht.

Davon sind Methyldiethanolamin und Methyldiisopropanolamin bevorzugt, wobei Methyldiethanolamin am meisten bevorzugt ist.

Geeignet sind weiterhin primäre Alkanolamine (d. h. solche, die über eine primäre Aminogruppe verfügen), worin an die Aminoruppe ein tertiäres Kohlenstoffatom gebunden ist. Davon ist 2-Amino-2-methylpropanol (2-AMP) bevorzugt.

Das Gewichtsverhältnis von Alkanolamin zu Piperazin in der erfindungsgemäßen Vormischung ist nicht kritisch, beträgt aber im Allgemeinen 1:7 bis 28:1, vorzugsweise 1:3 bis 28:1, besonders bevorzugt 1:1,5 bis 28:1.

Der Gesamtamingehalt der erfindungsgemäßen Vormischung beträgt mehr als 65 Gew.-%, vorzugsweise mehr als 70 Gew.-% und, besonders bevorzugt, mehr als 75 Gew.-%. Unter Gesamtamingehalt wird die Summe des Gewichts an Alkanolamin und Piperazin, bezogen auf das Gesamtgewicht der Vormischung verstanden.

Im technischen Maßstab wird Piperazin meist bei der Herstellung verschiedener Ethylenamine als eines der Wertprodukte erhalten. Hierbei beruht die Synthese auf der Umsetzung von Ethylendichlorid (EDC-Verfahren) oder Monoethanolamin (MEOA-Verfahren) mit Ammoniak. Weitere Koppelprodukte dieser Umsetzung sind Ethylendiamin, Diethylentriamin, Triethylentetramin und höhere lineare und cyclische Ethylenamine sowie zusätzlich Aminoethylethanolamin beim MEOA-Verfahren. Die Aufreinigung und Trennung des Ethylenamin-Produktgemisches erfolgt bei der industriellen Produktion meist über eine Kaskade von Kolonnen in kontinuierlichem Betrieb. Zunächst wird dabei der Ammoniak in einer Druckkolonne abgezogen, danach erfolgt die Abdestillation des gebildeten Prozesswassers. Bei den meisten dieser Prozesse fällt eine wässrige Piperazinlösung mit einer Konzentration von 50 bis 75 Gew.-%., meist etwa 67 Gew.-% an. Das molare Verhältnis von Wasser zu Piperazin in der 67 Gew.-%-igen Lösung beträgt etwa 2,25. Derartige wässrige Lösungen sind besonders bevorzugte Ausgangsmaterialien zur Herstellung der erfindungsgemäßen Vormischung. Die wässrige Piperazinlösung wird lediglich mit der gewünschten Menge an Alkanolamin und gegebenenfalls geringen Mengen Wasser versetzt. Die aufwendige Herstellung von festem Piperazin ist nicht erforderlich.

Die erfindungsgemäße Vormischung weist einen Erstarrungspunkt von weniger als 35 °C, meist 15 bis 30 °C auf. Sie kann ohne weiteres in beheizten undloder thermisch isolierten Behältern über weite Strecken transportiert und gelagert werden.

Die erfindungsgemäße Vormischung kann weitere funktionelle Bestandteile enthalten, wie Stabilisatoren, insbesondere Antioxidantien, vgl. z. B. die DE 102004011427, oder Korrosionsinhibitoren.

Zur Herstellung des gebrauchsfertigen Absorptionsmittels wird die erfindungsgemäße Vormischung mit den gewünschten Mengen an Wasser und gegebenenfalls Alkanolamin verdünnt. Zweckmäßigerweise verwendet man dasselbe Alkanolamin wie in der Vormischung enthalten. Selbstverständlich kann man zum Verdünnen der Vormischung auch eine wässrige Alkanolaminlösung verwenden. Das gebrauchsfertige Absorptionsmittel hat typischerweise einen Gesamtamingehalt von weniger als 70 Gew.-%, z. B. weniger als 65 Gew.-%, meist weniger als 60 Gew.-%, z. B. 35 bis 55 Gew.-%.

Zur Zubereitung eines Absorptionsmittels zur erstmaligen Inbetriebnahme einer Gasbehandlungsanlage versetzt man die erfindungsgemäße Vormischung mit solchen Mengen an Wasser und Alkanolamin, dass sich im fertigen Gemisch die gewünschten Konzentrationen an Piperazin und Alkanolamin einstellen.

Die erfindungsgemäße Vormischung lässt sich auch zum Ersatz von Verlustmengen an Alkanolamin und/oder Piperazin verwenden. Verluste von Alkanolamin und/oder Piperazin treten beim Betrieb einer Gasbehandlungsanlage aus verschiedenen Gründen auf, insbesondere aufgrund von Leckagen, Zersetzung oder weil Spuren von Alkanolamin und/oder Piperazin mit dem behandelten Gas abgeführt werden. Bei einem Absorptionsmittel, das zum Ersatz von Verlustmengen bestimmt ist, sind die unterschiedlichen Flüchtigkeiten und/oder Zersetzungsraten von Piperazin und Alkanolamin zu berücksichtigen. Da Piperazin im Allgemeinen flüchtiger ist als das Alkanolamin, muss im Betrieb eine relativ höhere Piperazinmenge ergänzt werden. In diesem Fall wird die erfindungsgemäße Vormischung nur mit Wasser bzw. einer geringeren Menge Alkanolamin verdünnt, als der Soll-Zusammensetzung des Absorptionsmittels entspricht.

Die Erfindung wird durch die beigefügten Figuren und die nachstehenden Beispiele näher veranschaulicht.

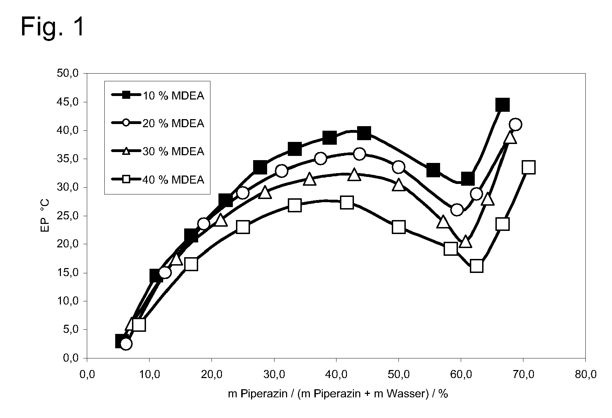

Figur 1 zeigt die Erstarrungspunkte für ternäre Gemische von Methyldiethanolamin/Piperazin/Wasser in Abhängigkeit vom Piperazin-Wasserverhältnis für verschiedene Gehalte an Methyldiethanolamin.

### Beispiel 1

Man stellte ternäre Gemische von Methyldiethanolamin/Piperazin/Wasser mit Methyldiethanolamin-Gehalten von 10, 20 bzw. 40 Gew.-% her. Der Gewichtsanteil Piperazin, bezogen auf die Summe an Piperazin und Wasser, wurde von 5 bis 70 Gew.-% variiert. Man bestimmte die Temperaturen für die hergestellten Gemische, bei denen erste Feststoffbildung zu erkennen war (Liquiduslinie). Die Ergebnisse sind in Figur 1 gezeigt. Man sieht, dass bei einem Gehalt von etwa 62 Gew.-% Piperazin, bezogen auf die Summe von Piperazin und Wasser, die Gemische ein Erstarrungspunkt-Minimum aufweisen.

### Beispiel 2

Man stellte ternäre Gemische von Methyldiethanolamin (MDEA)/Piperazin (PIP)/Wasser mit einem Gewichtsverhältnis von Methyldiethanolamin/Piperazin von 1:1, 2:1, 3:1 bzw. 1,5:1 und unterschiedlichen Wassergehalten her und bestimmte die Erstarrungspunkte der so hergestellten Gemische. Die Zusammensetzungen (in Gew.-%), das molare Verhältnis Wasser/Piperazin X(H₂O/PIP) und die Erstarrungspunkte (in °C) sind in der folgenden Tabelle zusammengefasst. Die Erstarrungspunkte sind als Ergebnis von drei Einzelmessungen und als Mittelwert angegeben.

| **MDEA: PIP = 1:1** | | | | | | | |
|---|---|---|---|---|---|---|---|
| MDEA | PIP | Wasser | X(H₂O/PIP) | Erstarrungspunkt | | | **MW** |
| 33,3 | 33,3 | 33,3 | 4,78 | 28,0 | 28,0 | 28,5 | **28,2** |
| 35,5 | 35,5 | 29,0 | 3,92 | 24,5 | 25,0 | 25,0 | **24,8** |
| 37,5 | 37,5 | 25 | 3,19 | 18,0 | 18,5 | 18,5 | **18,3** |
| 39,4 | 39,4 | 21,2 | 2,58 | 21,0 | 20,5 | 21,0 | **20,8** |
| 41,2 | 41,2 | 17,6 | 2,05 | 28,5 | 28,5 | 28,5 | **28,5** |

| **MDEA: PIP = 1,5:1** | | | | | | | |
|---|---|---|---|---|---|---|---|
| MDEA | PIP | Wasser | X(H₂O/PIP) | Erstarrungspunkt | | | **MW** |
| 42,8 | 28,6 | 28,6 | 4,78 | 21,0 | 20,5 | 21,0 | **20,8** |
| 45,2 | 30,1 | 24,7 | 3,92 | 16,5 | 16,0 | 16,0 | **16,2** |
| 47,4 | 31,6 | 21,0 | 3,19 | 7,5 | 7,0 | 7,5 | **7,3** |
| 49,4 | 32,9 | 17,7 | 2,58 | 10,0 | 10,0 | 10,0 | **10,0** |
| 51,2 | 34,1 | 14,7 | 2,05 | 17,0 | 16,0 | 16,0 | **16,3** |

| **MDEA: PIP = 2:1** | | | | | | | |
|---|---|---|---|---|---|---|---|
| MDEA | PIP | Wasser | X(H₂O/PIP) | Erstarrungspunkt | | | **MM** |
| 50 | 25 | 25 | 4,78 | 16,0 | 16,5 | 16,0 | **16,2** |
| 52,4 | 26,2 | 21,4 | 3,92 | 11,0 | 11,0 | 11,5 | **11,2** |

| MDEA: PIP = 2:1 | | | | | | | |
|---|---|---|---|---|---|---|---|
| MDEA | PIP | Wasser | X(H**₂**O/PIP) | Erstarrungspunkt | MW | | |
| 54,5 | 27,3 | 18,2 | 3,19 | keine Kristallisation | | | |
| 56,5 | 28,3 | 15,2 | 2,58 | ab -20°C sehr zäh | | | |
| 58,3 | 29,2 | 12,5 | 2,05 | -40°C glasartig fest | | | |

| MDEA: PIP = 3:1 | | | | |
|---|---|---|---|---|
| MDEA | PIP | Wasser | X(H**₂**O/PIP) | Erstarrungspunkt |
| 60,0 | 20,0 | 20,0 | 4,78 | keine Kristallisation |
| 62,3 | 20,7 | 17,0 | 3,92 | ab -20°C sehr zäh |
| 54,5 | 27,3 | 18,2 | 3,19 | -40°C glasartig fest |
| 56,5 | 28,3 | 15,2 | 2,58 | |
| 58,3 | 29,2 | 12,5 | 2,05 | |

### Beispiel 3

Man wiederholte das Beispiel 2, wobei man jedoch ternäre Gemische von Methyldiisopropanolamin (MDIPA)/Piperazin (PIP)/Wasser mit einem Gewichtsverhältnis von Methyldiisopropanolamin/Piperazin von 1:1 verwendete. Die Zusammensetzungen (in Gew.-%), das molare Verhältnis Wasser/Piperazin X(H₂O/PIP) und die Erstarrungspunkte (in °C) sind in der folgenden Tabelle zusammengefasst.

| MDIPA: PIP = 1:1 | | | | | | | |
|---|---|---|---|---|---|---|---|
| MDIPA | PIP | Wasser | X(H₂O/PIP) | Erstarrungspunkt | | | MW |
| 33,3 | 33,3 | 33,3 | 4,78 | 36,0 | 35,0 | 36,0 | 35,7 |
| 35,5 | 35,5 | 29,0 | 3,92 | 33,0 | 33,0 | 33,0 | 33,0 |
| 37,5 | 37,5 | 25 | 3,19 | 29,0 | 29,0 | 29,0 | 29,0 |
| 39,4 | 39,4 | 21,2 | 2,58 | 26,0 | 26,0 | 27,0 | 26,3 |
| 41,2 | 41,2 | 17,6 | 2,05 | 34,0 | 35,0 | 34,0 | 34,3 |

### Beispiel 4

Man wiederholte das Beispiel 2, wobei man jedoch ternäre Gemische von 2-Amino-2-methylpropanol (2-AMP)/Piperazin (PIP)/Wasser mit einem Gewichtsverhältnis von 2-Amino-2-methylpropanol/Piperazin von 1:1 verwendete. Die Zusammensetzungen (in Gew.-%), das molare Verhältnis Wasser/Piperazin X(H₂O/PIP) und die Erstarrungspunkte (in °C) sind in der folgenden Tabelle zusammengefasst.

| 2-AMP: PIP = 1:1 | | | | | | | |
|---|---|---|---|---|---|---|---|
| 2-AMP | PIP | Wasser | X(H₂O/PIP) | Erstarrungspunkt | | | MW |
| 33,3 | 33,3 | 33,3 | 4,78 | 29,0 | 28,0 | 28,0 | 28,3 |
| 35,5 | 35,5 | 29,0 | 3,92 | 21,0 | 21,0 | 21,0 | 21,0 |
| 37,5 | 37,5 | 25 | 3,19 | 18,0 | 19,0 | 19,0 | 18,7 |
| 39,4 | 39,4 | 21,2 | 2,58 | 26,0 | 26,0 | 26,0 | 26,0 |
| 41,2 | 41,2 | 17,6 | 2,05 | 32,0 | 33,0 | 33,0 | 32,7 |

## Patentansprüche

1. Vormischung zur Herstellung eines Absorptionsmittels zum Entfernen saurer Gase aus Fluidströmen, enthaltend wenigstens ein Alkanolamin, Piperazin und Wasser, wobei die Vormischung einen Gesamtamingehalt von mehr als 65 Gew.-% aufweist, **dadurch gekennzeichnet, dass** das molare Verhältnis von Wasser zu Piperazin in der Vormischung 1,6 bis 4,8 beträgt und die Vormischung einen Erstarrungspunkt von weniger als 35°C aufweist.

2. Vormischung nach Anspruch 1, wobei das molare Verhältnis von Wasser zu Piperazin in der Vormischung 1,6 bis 3,9 beträgt.

3. Vormischung nach Anspruch 1 oder 2, wobei das Alkanolamin die allgemeine Formel
R¹ₙR²₍₃₋ₙ₎N
aufweist, worin R¹ für Hydroxy-C₂-C₃-alkyl, R² für C₁-C₃-Alkyl und n für eine ganze Zahl von 1 bis 3 steht.

4. Vormischung nach Anspruch 3, wobei das Alkanolamin unter Methyldiethanolamin und Methyldiisopropanolamin ausgewählt ist.

5. Vormischung nach Anspruch 1 oder 2, wobei das Alkanolamin ein primäres Alkanolamin ist, worin an die Aminogruppe ein tertiäres Kohlenstoffatom gebunden ist.

6. Vormischung nach Anspruch 5, wobei das Alkanolamin 2-Amino-2-methyl-propanol ist.

7. Vormischung nach einem der vorhergehenden Ansprüche, wobei das Gewichtsverhältnis von Alkanolamin zu Piperazin in der Vormischung 1:7 bis 28:1 beträgt.

8. Vormischung nach Anspruch 7, wobei das Gewichtsverhältnis von Alkanolamin zu Piperazin in der Vormischung 1:3 bis 28:1 beträgt.

9. Vormischung nach einem der vorhergehenden Ansprüche, wobei der Gesamtamingehalt mehr als 70 Gew.-% beträgt.

10. Verfahren zur Herstellung eines Absorptionsmittels zum Entfernen saurer Gase aus Fluidströmen, wobei man eine Vormischung nach einem der vorhergehenden Ansprüche mit Wasser und gegebenenfalls einem Alkanolamin vermischt.

11. Verwendung einer Vormischung nach einem der Ansprüche 1 bis 9 zum Transport und/oder Lagerung in beheizten und/oder thermisch isolierten Behältern.

12. Verwendung einer Vormischung nach einem der Ansprüche 1 bis 9 zum Ersatz von Verlustmengen an Alkanolamin und/oder Piperazin, die beim Betrieb einer Gasbehandlungsanlage auftreten.

13. Verwendung einer Vormischung nach einem der Ansprüche 1 bis 9 zur Herstellung eines Absorptionsmittels zum Entfernen saurer Gase aus Fluidströmen.

14. Verfahren zur Herstellung einer Vormischung nach einem der Ansprüche 1 bis 9, wobei man eine wässrige Piperazinlösung mit einer Konzentration von 50 bis 75 Gew.-% mit Alkanolamin und gegebenenfalls Wasser versetzt.

## Claims

1. A premix for producing an absorption medium for removing acid gases from fluid streams comprising at least one alkanolamine, piperazine and water, in which the premix has a total amine content of more than 65% by weight, wherein the molar ratio of water to piperazine in the premix is 1.6 to 4.8 and the premix has a solidification point of below 35°C.

2. The premix according to claim 1, in which the molar ratio of water to piperazine in the premix is 1.6 to 3.9.

3. The premix according to claim 1 or 2, in which the alkanolamine has the general formula
R¹ₙR²₍₃₋ₙ₎N,
where R¹ is hydroxy-C₂-C₃-alkyl, R² is C₁-C₃-alkyl and n is an integer from 1 to 3.

4. The premix according to claim 3, in which the alkanolamine is selected from methyldiethanolamine and methyldiisopropanolamine.

5. The premix according to claim 1 or 2, in which the alkanolamine is a primary alkanolamine, where a tertiary carbon atom is bound to the amino group.

6. The premix according to claim 5, in which the alkanolamine is 2-amino-2-methylpropanol.

7. The premix according to one of the preceding claims, in which the weight ratio of alkanolamine to piperazine in the premix is 1:7 to 28:1.

8. The premix according to claim 7, in which the weight ratio of alkanolamine to piperazine in the premix is 1:3 to 28:1.

9. The premix according to one of the preceding claims, in which the total amine content is more than 70% by weight.

10. A process for producing an absorption medium for removing acid gases from fluid streams, in which a premix according to one of the preceding claims is mixed with water and optionally an alkanolamine.

11. The use of a premix according to one of claims 1 to 9 for transport and/or storage in heated and/or thermally insulated containers.

12. The use of a premix according to one of claims 1 to 9 for replacing losses of alkanolamine and/or piperazine that occur during operation of a gas treatment system.

13. The use of a premix according to one of claims 1 to 9 for producing an absorption medium for removing acid gases from fluid streams.

14. A process for producing a premix according to one of claims 1 to 9, in which an aqueous piperazine solution having a concentration from 50 to 75% by weight is admixed with alkanolamine and optionally water.

## Revendications

1. Prémélange pour la fabrication d'un agent d'absorption pour l'élimination de gaz acides de courants fluides, contenant au moins une alcanolamine, de la pipérazine et de l'eau, le prémélange présentant une teneur en amines totale de plus de 65 % en poids, **caractérisé en ce que** le rapport molaire entre l'eau et la pipérazine dans le prémélange est de 1,6 à 4,8, et le prémélange présente un point de solidification de moins de 35 °C.

2. Prémélange selon la revendication 1, dans lequel le rapport molaire entre l'eau et la pipérazine dans le prémélange est de 1,6 à 3,9.

3. Prémélange selon la revendication 1 ou 2, dans lequel l'alcanolamine présente la formule générale
R¹ₙR²₍₃₋ₙ₎N
dans laquelle R¹ représente hydroxy-alkyle en C₂-C₃, R² représente alkyle en C₁-C₃ et n représente un nombre entier de 1 à 3.

4. Prémélange selon la revendication 3, dans lequel l'alcanolamine est choisie parmi la méthyldiéthanolamine et la méthyldiisopropanolamine.

5. Prémélange selon la revendication 1 ou 2, dans lequel l'alcanolamine est une alcanolamine primaire, un atome de carbone tertiaire étant relié au groupe amino.

6. Prémélange selon la revendication 5, dans lequel l'alcanolamine est le 2-amino-2-méthyl-propanol.

7. Prémélange selon l'une quelconque des revendications précédentes, dans lequel le rapport en poids entre l'alcanolamine et la pipérazine dans le prémélange est de 1:7 à 28:1.

8. Prémélange selon la revendication 7, dans lequel le rapport en poids entre l'alcanolamine et la pipérazine dans le prémélange est de 1:3 à 28:1.

9. Prémélange selon l'une quelconque des revendications précédentes, dans lequel la teneur en amines totale est de plus de 70 % en poids.

10. Procédé de fabrication d'un agent d'absorption pour l'élimination de gaz acides de courants fluides, selon lequel un prémélange selon l'une quelconque des revendications précédentes est mélangé avec de l'eau et éventuellement une alcanolamine.

11. Utilisation d'un prémélange selon l'une quelconque des revendications 1 à 9 pour le transport et/ou le stockage dans des contenants chauffés et/ou isolés thermiquement.

12. Utilisation d'un prémélange selon l'une quelconque des revendications 1 à 9 pour le remplacement de quantités perdues d'alcanolamine et/ou de pipérazine qui se produisent lors de l'exploitation d'une unité de traitement de gaz.

13. Utilisation d'un prémélange selon l'une quelconque des revendications 1 à 9 pour la fabrication d'un agent d'absorption pour l'élimination de gaz acides de courants fluides.

14. Procédé de fabrication d'un prémélange selon l'une quelconque des revendications 1 à 9, selon lequel une solution aqueuse de pipérazine d'une concentration de 50 à 75 % en poids est mélangée avec une alcanolamine et éventuellement de l'eau.
